# EUROPEAN PATENT SPECIFICATION

(11) **EP 2 546 507 B1**
(45) Date of publication and mention of the grant of the patent: **22.04.2015**
(21) Application number: 10847435.4
(22) Date of filing: 11.03.2010
(51) Int. Cl.: F02M 25/07, F02M 35/104

(54) **EGR APPARATUS FOR INTERNAL COMBUSTION ENGINE**
AGR-GERÄT FÜR EINEN VERBRENNUNGSMOTOR
DISPOSITIF DE RECIRCULATION DES GAZ D'ÉCHAPPEMENT (RGE) POUR MOTEUR À COMBUSTION INTERNE

(43) Date of publication of application: 16.01.2013
(73) Proprietor: TOYOTA JIDOSHA KABUSHIKI KAISHA, Toyota-shi, Aichi-ken, 471-8571 (JP)
(72) Inventor: KATO, Kichiro, Toyota-shi Aichi 471-8571 (JP); YOEDA, Keiji, Toyota-shi Aichi 471-8571 (JP)
(74) Representative: Winter, Brandl, Fürniss, Hübner, Röss, Kaiser, Polte - Partnerschaft mbB
(86) International application number: PCT/JP2010/054121
(87) International publication number: WO 2011/111205

(56) References cited:
- EP-A1- 1 522 717
- EP-A2- 1 167 739
- JP-A- 10 169 514
- JP-A- 55 078 157
- JP-A- 2004 183 484
- JP-A- 2009 209 855
- JP-U- 58 178 453
- US-A1- 2005 235 972

## Description

### [Technical Field]

This invention relates to an EGR apparatus for an internal combustion engine.

### [Background Art]

The technology, wherein a part of an EGR passage is formed inside a cylinder head, and a space is provided inside the cylinder head for retaining an EGR gas therein, is known (see, for example, Patent Documents 1 and 2). According to this technology, a period of time for the EGR gas to pass through the EGR passage becomes longer, thereby cooling of the EGR gas with cooling water can be further accelerated. Moreover, a large quantity of EGR gas can be retained inside the cylinder head, cooling of the EGR gas can be accelerated.

However, a distance from an exhaust system to an intake system becomes longer, and, therefore, a responsiveness of an EGR gas control is deteriorated, and, because of this, there is a possibility that a combustion state and an exhaust state may be deteriorated. In addition, by providing an EGR gas retention chamber in the cylinder head, the cylinder head becomes larger and a mass is increased. Moreover, due to the fact that the cylinder head receives a heat from the EGR gas, it is possible that a localized deformation of the cylinder head may be caused.

### [Prior Art Documents]

### [Patent Documents]

[Patent Document 1] Japanese Patent Laid Open Publication No. 2009-091925
[Patent Document 2] EP 1 522 717 A1

### [Summary of the Invention]

### [Problems to be Solved by the Invention]

The present invention was made in view of the above-mentioned problems, and an object of the present invention is to provide a technology to decrease a temperature of the EGR gas rapidly.

### [Means for Solving the Problems]

In order to achieve the above-mentioned object, the EGR apparatus for the internal combustion engine according to the present invention is such that, an EGR apparatus for an internal combustion engine is comprising an EGR passage which connects an exhaust passage with an intake passage of the internal combustion engine, and a part of an exhaust gas which flows through the exhaust passage is supplied to the intake passage as the EGR gas, wherein
a part of the EGR passage is arranged to surround a part of the intake passage.

Hence, a heat exchange is made between an intake air flowing through the intake passage and the EGR gas flowing through the EGR passage, so that the temperature of the EGR gas can be decreased. That is, the EGR gas can be cooled by utilizing the intake air. Thereby, a cooling apparatus for cooling the EGR gas can be abolished.

With the present invention, the intake passage is formed in an intake manifold which distributes the intake air to each cylinder,
the intake manifold is structured by comprising a flange for fixing the intake manifold to a cylinder head of the internal combustion engine,
the intake passage opens into the flange surface which is the surface of the flange on the side of contacting with the cylinder head, and
a part of the EGR passage may be formed by a space surrounded by a groove formed around and along the intake passage in the flange surface, and by the cylinder head.

By providing the groove in the flange surface, when the intake manifold is fixed to the cylinder head, this groove is covered by an outer wall of the cylinder head, thereby a passage is formed. The EGR gas flows through this passage. Hence, the heat from the EGR gas is absorbed by the circumference of the intake passage and the cylinder head, so that the EGR gas can be cooled.

In the present invention, an EGR valve, which adjusts a passage area of the EGR passage, may be provided in the EGR passage at the downstream side from the groove in the flow direction of the EGR gas. With this arrangement, the EGR gas, which has been cooled by the intake air, passes through this EGR valve, so that a possible damage to the EGR valve, which may be caused by the heat, can be avoided.

In the present invention, the EGR passage at the upstream side from the groove in the flow direction of the EGR gas, may be arranged along the outer edges of the intake manifold. With this arrangement, the heat exchange between the intake air and the EGR gas is made in the outer edges of the intake manifold. Thereby, the EGR gas can be cooled.

In the present invention, a cooling water passage may be provided adjacent to a part of the EGR passage which is disposed along the outer edges of the intake manifold. Namely, here, the heat exchange is made between the cooling water and the EGR gas, thereby the temperature of the EGR gas can be further decreased. Moreover, the temperature of the intake manifold can be decreased, which, in turn, the temperature of the intake air can be decreased, so that the charging efficiency can be increased.

The present invention comprises:
a temperature acquiring apparatus which acquires the temperature of the cooling water in the cooling water passage;
a cooling water control valve which adjust a passage area of the cooling water passage; and
a control apparatus which controls the cooling water control valve or the EGR valve based on the temperature acquired by the temperature acquiring apparatus, wherein,
the control apparatus can set the temperature for opening the cooling water control valve at a temperature higher than the temperature for opening the EGR valve.

With this arrangement, condensation of moisture contained in the EGR gas can be suppressed. Whereby residing the water within the EGR passage can be suppressed, so that corrosion of the wall surfaces of the EGR passage can be suppressed.

### [Effects of the Invention]

According to the present invention, the temperature of the EGR gas can be decreased rapidly.

### [Brief Description of the Drawings]

[FIG. 1] A diagram showing a schematic structure of an internal combustion engine and its intake system and exhaust system.
[FIG. 2] A cross-sectional diagram of an EGR apparatus.
[FIG. 3A] A diagram, viewed from the side, of an intake manifold according to an Embodiment 1.
[FIG. 3B] A diagram, viewed from above the internal combustion engine, of the intake manifold according to the Embodiment 1.
[FIG. 3C] A diagram, viewed from the side, of an intake manifold according to the Embodiment 1.
[FIG. 4A] A diagram, viewed from above the internal combustion engine, of an intake manifold according to an Embodiment 2.
[FIG. 4B] A diagram, viewed from the side, of the intake manifold according to the Embodiment 2.
[FIG. 5] A block diagram showing correlation between the apparatuses according to the Embodiment 2.
[FIG. 6] A flow chart showing a control flow of an EGR valve and a cooling water control valve according to the Embodiment 2.

### [Modes of Carrying out the Invention]

Hereinafter, a description will be made of specific Embodiments of the EGR apparatus of the internal combustion engine according to the present invention, based on the accompanying drawings.

### [Embodiment 1]

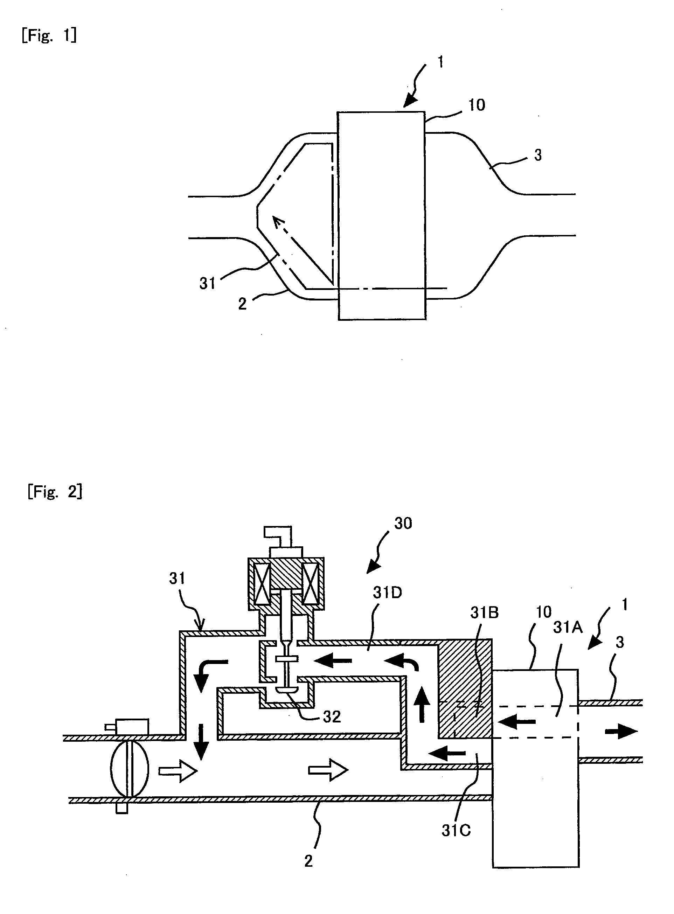

Fig. 1 is a diagram showing a schematic structure of an internal combustion engine and its intake system and exhaust system according to the present Embodiment. An internal combustion engine 1 shown in Fig. 1 is a diesel engine comprising four (4) cylinders. Note that the present Embodiment and the Embodiments which will be described hereafter can be applied also to gasoline engines.

The internal combustion engine 1 is provided with a cylinder head 10. To this cylinder head 10, there are connected an intake manifold 2 which distributes intake air to each cylinder and an exhaust manifold 3 in which an exhaust gas from each cylinder is collected. Further, a dot-and-chain line in Fig. 1 indicates a flow passage of an EGR gas (an EGR passage 31).

The internal combustion engine 1 includes an EGR apparatus 30 for recirculating a part of the exhaust gas flows through the exhaust manifold 3 to the intake manifold 2. Fig. 2 is a cross-sectional diagram of the EGR apparatus 30. A black arrow mark indicates a flow direction of the EGR gas, and a white arrow mark indicates a flow direction of fresh air. This EGR apparatus 30 is structured by comprising the EGR passage 31 and an EGR valve 32. The EGR passage 31 connects the exhaust manifold 3 and the intake manifold 2. The part of the exhaust gas is recirculated by flowing through this EGR passage 31. Moreover, the EGR valve 32 adjust the quantity of the EGR gas flowing through the EGR passage 31 by adjusting a passage cross-sectional area of the EGR passage 31.

The EGR passage 31 is connected to the intake manifold 2 from the exhaust manifold 3 going through the inside of the cylinder head 10. In the inside of the internal combustion engine 1, there is provided an inner-head EGR passage 31A as a part of the EGR passage 31.

In the intake manifold 2, there are provided an EGR introduction passage 31B, an EGR passage groove 31C and en EGR external passage 31D, as the part of the EGR passage 31. Noted that in the present Embodiment, the EGR passage groove 31C corresponds to a groove in the present invention.

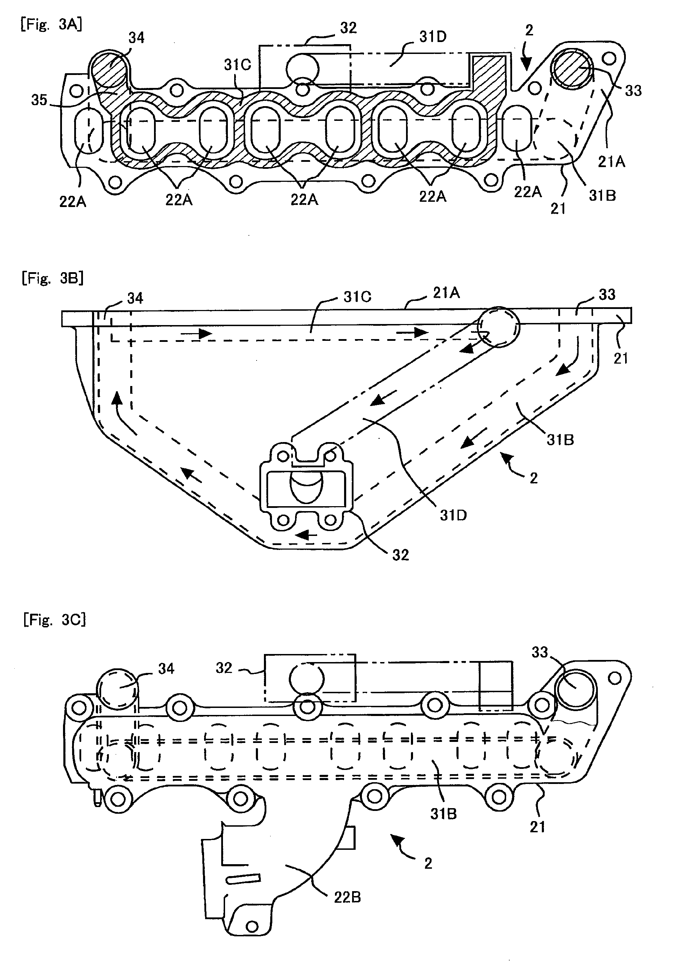

Fig. 3A is a diagram, viewed from the side, of the intake manifold 2 according to the present Embodiment. Fig. 3B is a diagram, viewed from above the internal combustion engine 1, of the intake manifold 2 according to the present Embodiment. Fig. 3C is a diagram, viewed from the side, of the intake manifold 2 according to the present Embodiment. That is, Fig. 3A is a diagram, viewed from the side of the cylinder head 10, of the intake manifold 2. Further, Fig. 3A is depicted by reversing the right and left in order to be easily understood. Fig. 3A may be depicted as a diagram, viewed from inside the intake manifold 2, of the side of cylinder head 10. Moreover, the hatched portion in Fig. 3A indicates the place where the EGR gas flows. Further, an arrow mark in Fig. 3B indicate a flow direction of the EGR gas. Fig. 3C is a diagram, viewed from the opposite side of the cylinder head 10, of the intake manifold 2.

In the intake manifold 2, a flange 21 is formed for fixing the intake manifold 2 to the cylinder head 10. The intake manifold 2 is fixed to the cylinder head 10 with bolts and nuts. A gasket may be inserted between the intake manifold 2 and the cylinder head 10.

In the intake manifold 2, an intake passage 22 is formed through which the intake air flows, and an opening 22A of the intake passage 22 is provided in the surface (a flange surface 21A) at the side of the cylinder head 10 of the flange 21. This opening 22A is provided in two (2) in each cylinder to correspond to intake ports formed in the cylinder head 10. Further, in the intake manifold 2, one entrance 22B of the intake passage 22 is provided, and the intake passage 22 is branched inside the intake manifold 2 and each branched passage communicates with each opening 22.

In the intake manifold 2, the EGR passage groove 31C is formed. The EGR passage groove 31C is formed from the flange surface 21A towards inside of the intake manifold 2 in a horizontal direction in a predetermined depth. This EGR passageway groove 31C is formed between at least a part of the opening 22A of the intake passage 22 and the outer edges of the flange 21 along the opening 22A. Further, the EGR passage groove 31C surrounds the upper side and the lower side of the opening 22A, and at a part of this EGR passage groove 31C, this is also formed between the adjacent openings 22A. Still further, this EGR passage groove 31C is covered with the cylinder head 10 by fixing the intake manifold 2 to the cylinder head 10. In other words, a space, which is surrounded by the EGR passage groove 31C and cylinder head 10, is formed, thereby when the EGR gas is flowed into the EGR passage groove 31C, the EGR gas does not flow out to the outside. A width and a depth of the EGR passage groove 31C are determined such that the passage area of the EGR passage groove 31C becomes the same or in the vicinity of the passage area at another place of the EGR passage 31, in comparing therewith. As such, the EGR passage groove 31C is formed so that it surrounds the intake passage 22 in the vicinity of the opening 22A.

Moreover, in the flange 21, an EGR outlet 33, which becomes an inlet of the EGR introduction passage 31B formed in the intake manifold 2, is formed. The EGR outlet 33 is formed at a location outside of the direction of the arrangement of the cylinders and at the upper side of the vertical direction, than the opening 22A positioned at the utmost outside in the direction of arrangement of the cylinders, so as to conform to the place where the inner-head EGR passage 31A is open.

Next, the EGR introduction passage 31B is formed from one end to the other end of the flange 21 along the outer edges of the intake manifold 2. Specifically, the EGR introduction passage 31B extends downwardly immediately from the EGR outlet 33, and reaches the lower portion of the intake manifold. From there, the EGR introduction passage 31B extends in the horizontal direction along the outer edges of the intake manifold 2 to move away from the cylinder head 10 once, and reaches in the vicinity of the entrance 22B of the intake passage 22. Thereafter, the EGR introduction passage 31B extends along the outer edges of the intake manifold 2 so as to approach the other end of the flange 21. Then, in the vicinity of the flange 21, it extends upwardly and is connected with the EGR inlet 34 formed in the flange 21. That is, in the direction of the arrangement of cylinders of the flange 21, the EGR outlet 33 is provided at one end, and the EGR inlet 34 is provided at the other end.

The EGR inlet 34 is opened into a groove communicating with the EGR passage groove 31C (hereinafter, it will be called "a communication groove 35). Namely, the EGR inlet 34 and the EGR passage groove 31C are communicating with each other by means of the communication groove 35. The communication groove 35 is a groove formed in the flange surface 21A between the opening 22A of the intake passage 22 and the outer edges of the flange 21. Further, the EGR inlet 34 and the communication groove 35 are covered by the cylinder head 10 when the intake manifold 2 is fixed to the cylinder head 10, so that the EGR gas does not leak from here to the outside.

Moreover, one end of the EGR external passage 31D is connected to the end of the EGR passage groove 31C at one end of the flange 21, namely, to the end of the EGR passage groove 31C opposite to the EGR inlet 34 in the direction of the arrangement of cylinders. The other end of this EGR external passage 31D is connected to the EGR valve 32 disposed in the upper portion of the intake manifold 2. Then, the EGR external passage 31D is disposed at the upper side from the intake manifold 2. Still further, the EGR passage 31 at the downstream from the EGR valve 32 is connected to the vicinity of the entrance 22B of the intake passage 22.

With the EGR apparatus 30 structured as described above, the part of the exhaust gas flows through the exhaust manifold 3 is taken into the EGR passage 31 as the EGR gas. This EGR gas flows in the order of the inner-head EGR passage 31A, the EGR outlet 33, the EGR introduction passage 31B, the EGR inlet 34, the communication groove 35, the EGR passage groove 31C, the EGR external passage 31D, the EGR valve 32, and introduced into the intake passage 22 inside the intake manifold. At this time, inside the cylinder head 10, a heat exchange is carried out between the EGR gas and the cooling water of the internal combustion engine 1, thereby the temperature of the EGR gas is decreased. In addition, in the EGR introduction passage 31B, the heat exchange is carried out between the EGR gas, the external air and the intake air, so that the temperature of the EGR gas is decreased. Further, in the EGR passage groove 31C, the heat exchange is carried out between the EGR gas and the intake air, so that the temperature of the EGR gas is decreased. Still further, the heat of the EGR gas flowing through the EGR passage groove 31C is absorbed by the cylinder head 10, so that the temperature of the EGR gas is also decreased.

In this way, the temperature of the EGR gas can be decreased. Accordingly, it is not required to provide an EGR cooler, thereby the number of parts can be reduced, which, in turn results in cost down. Further, the EGR cooler is so set-up as not to receive the head from the exhaust passage and a catalyst, and, hence, there may be a case where setting-up of the EGR cooler is difficult, but with the present Embodiment, the EGR gas can be cooled without requiring the EGR cooler. Still further, with the present Embodiment, the temperature of the EGR gas can be decreased at the upstream side of the EGR valve 32, thereby occurrence of a trouble in the EGR valve 32 can be suppressed.

Moreover, by forming the EGR passage groove 31C to surround the opening 22A of the intake passage 22, the flow of the EGR gas is improved so that retention of the EGR gas can be suppressed. Whereby, deterioration of responsiveness at the time of controlling the EGR gas quantity can be suppressed.

Note that the EGR introduction passage 31B may not be provided. That is, the EGR inlet 34 may be provided to conform to the opening of the head-inside EGR passage 31A. In this case, the EGR inlet 34 is connected to one end of the EGR passage groove 31C in the direction of the arrangement of cylinders, and the EGR external passage 31D is connected to the other end. Namely, the EGR gas flows in the order of the EGR inlet 34, the communication groove 35, the EGR passage groove 31C, the EGR external passage 31D, and the EGR valve 32. In the EGR apparatus 30 structured in the manner, the heat exchange is made between the EGR gas and the intake air, thereby the EGR gas can also be cooled.

### [Embodiment 2]

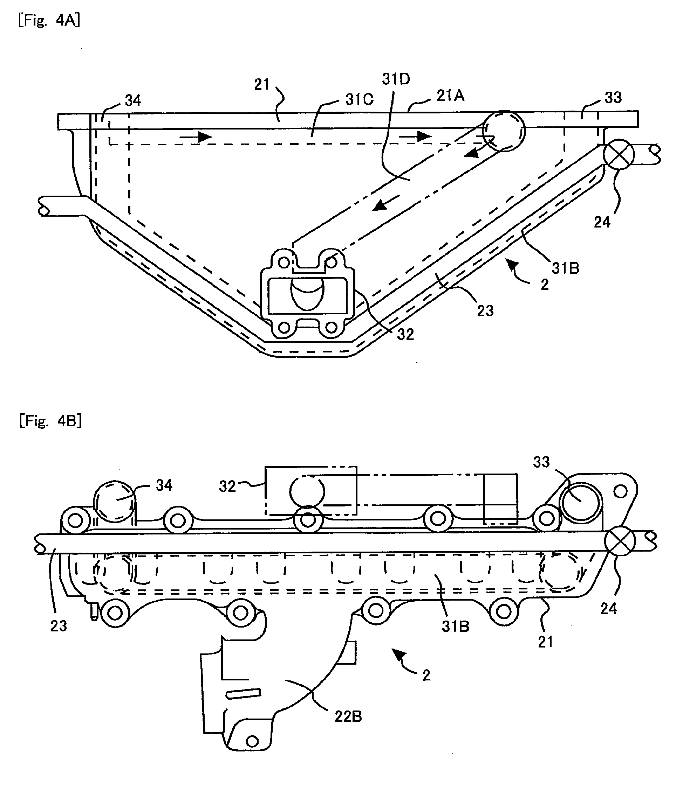

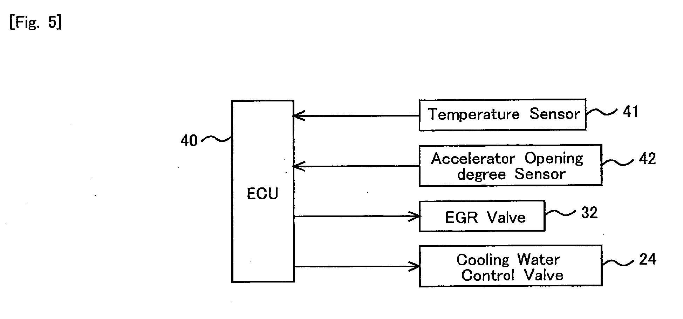

Fig. 4A is a diagram, viewed from above the internal combustion engine 1, of the intake manifold 2 according to this Embodiment. Fig. 4B is a diagram, viewed from the side, of the intake manifold 2 according to this Embodiment. In Fig 4A, an arrow mark indicates a flow direction of the EGR gas. Fig. 4B is a diagram, viewed from the opposite of the cylinder head 10, of the intake manifold 2. Further, Fig. 5 is a block diagram showing a correlation between the apparatuses according to the present Embodiment. A description of the present Embodiment will be made mainly with regard to points of difference from the Embodiment 1.

With the present Embodiment, a cooling water passage 23, through which the cooling water of the internal combustion engine 1 flows, is provided along the EGR introduction passage 31B. The cooling water passage 23 is provided in the vicinity of the EGR introduction passage 31B and along the EGR introduction passage 31B so that the heat exchange is made between the cooling water and the EGR gas. In the present Embodiment, the EGR introduction passage 31B is provided at the lower portion of the intake manifold 2, so that the cooling water passage 23 is provided at the upper side of the EGR introduction passage 31B and at the upper portion of the intake manifold 2. Further, a cooling water control valve 24 is provided at the midway of the cooling water passage 23, for changing a cross-sectional area of the cooling water passage 23. Still further, a temperature sensor 41 is attached to the internal combustion engine 1 for measuring the temperature of the cooling water. Note that in the present Embodiment, the temperature sensor 41 corresponds to the temperature acquiring apparatus of the present invention. Further, the temperature of the cooling water may be estimated based on the elapsed time from the start-up of the internal combustion engine 1 or the operation state of the internal combustion engine 1.

With the internal combustion engine 1 structured as described above, an ECU 40, which is an electronic control unit, is provided as an annex for controlling the internal combustion engine 1. This ECU 40 controls the operating state of the internal combustion engine 1 according to the operating conditions of the internal combustion engine 1 and a demand made by a driver.

Further, in addition to the above-mentioned sensors, to the ECU 40, there is connected through an electric wiring, an acceleration opening degree sensor 42 which outputs an electric signal corresponding to an amount of stepping of an accelerator pedal by the driver and detects an engine load, and output signals of these various sensors are inputted into the ECU 40. On the other hand, the EGR valve 32 and the cooling water control valve 24 are connected to the ECU 40 through the electric wiring, thereby the EGR valve 32 and the cooling water control valve 24 are controlled by the ECU 40. Note that in the present Embodiment, the ECU 40 corresponds to the control apparatus of the present invention.

Then, with the present Embodiment, the EGR valve 32 and the cooling water control valve 24 are controlled according to the temperature of the cooling water of the internal combustion engine 1 or the load of the internal combustion engine 1.

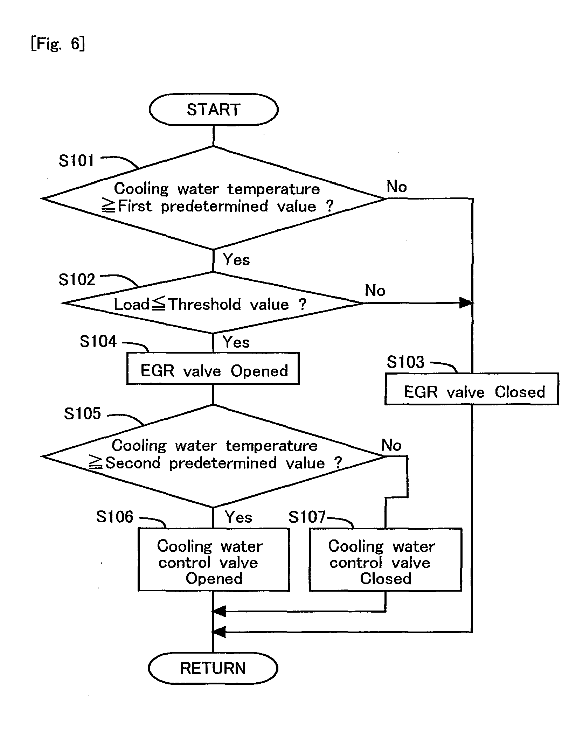

Fig. 6 is a flow chart showing a control flow of the EGR valve 32 and the cooling water control valve 24 according to the present Embodiment. This routine is executed by the ECU 40 at predetermined time intervals.

In a step S101, it is determined whether the cooling water temperature is equal to or higher than a first predetermined value, or not. This first predetermined value is to be the lower limit value of the cooling water temperature, at which temperature, the combustion state is not deteriorated even when the EGR gas is supplied to the internal combustion engine 1. Namely, when the EGR gas is supplied, while the cooling water temperature is low, there may be a possibility of deteriorating the combustion state, so that with the present step, it is determined whether the cooling water temperature is high to the extent that the EGR gas can be supplied. When an affirmative determination is made in the step S101, the process advances to a step S102. Further, when a negative determination is made in the step S101, the process advances to a step S103 and the EGR valve 32 is fully closed. As described above, by fully closing the EGR valve 32, supply of the EGR gas is stopped, thereby deterioration of the combustion state can be suppressed.

In the step S102, it is determined whether the load of the internal combustion engine 1 is equal to or below a threshold value, or not. This threshold value is to be an upper limit value of the load at which the combustion state is not deteriorated when the EGR gas is supplied to the internal combustion engine 1, or an upper limit value of the load at which the charging efficiency becomes within a permissible range even when the supply of the EGR gas is stopped. That is, when the EGR gas is supplied while the load is high, there is a possibility that the combustion state is deteriorated. Further, when the load is high, the temperature of the intake manifold 2 can be decreased, thereby the output can be increased by increasing the charging efficiency. In other words, with the present step, it is determined whether or not the load is to the extent where the EGR gas can be supplied. When the affirmative determination is made in the step S102, the process advances to a step S104. Further, when a negative determination is made in the step S102, the process advances to the step S103 and the EGR valve 32 is fully closed. By fullyclosing the EGR valve 32, the supply of the EGR gas is stopped, thereby deterioration of the combustion state can be suppressed, and the charging efficiency can be improved.

In the step S104, the EGR valve 32 is opened. At this time, a feed-back control may be performed thereby to have an opening degree of the EGR valve 32 such that the intake air amount reaches a target value.

This feed-back control is performed by adjusting an opening degree of the EGR valve 32 so that the intake air amount reaches the target value. The intake air amount is measured by, for example, an air flow meter. The target value of the intake air amount is determined according to the operating state of the internal combustion engine 1 (for example, a number of revolutions of the engine and the engine load) . For example, when the measured value of the intake air amount is less than the target value, it is regarded that the EGR gas amount is larger than the target value, and the opening degree of the EGR valve 32 is made smaller to reduce the EGR gas amount. On the contrary, for example, when the measured value of the intake air amount is larger than the target value, it is regarded that the EGR gas amount is less then the target value, and the opening degree of the EGR valve 32 is made larger to increase the EGR gas amount. Further, the opening degree of the EGR valve 32 may be determined from the number of revolutions of the engine and the engine load.

In the step S105, it is determined whether the cooling water temperature is equal to or higher than a second predetermined value. This second predetermined value is the value which is larger than the first predetermined value and it is the lower limit value of the temperature at which water is not condensed inside the EGR passage 31 when the heat exchange is performed between the EGR gas and the cooling water. That is, with the present step, it is determined, by circulating the cooling water, whether or not water is not condensed inside the EGR passage 31.

When the affirmative determination is made in the step S105, the process advances to a step S106 and the cooling water control valve 24 is opened. At this time, the cooling water control valve 24 may be fully opened. By fully opening of the cooling water control valve 24, the heat exchange is made between the EGR gas and the cooling water, thereby the temperature of the EGR gas is decreased. Further, when the negative determination is made in the step S105, the process advances to a step S107, and the cooling water control valve 24 is fully closed. Whereby, the retention of the condensed water in the EGR introduction passage 31B and the EGR passage groove 31C can be suppressed.

According to the present Embodiment as described above, in addition to the effects of the Embodiment 1, the EGR gas can be cooled by the cooling water of the internal combustion engine 1. Whereby, the EGR cooler can be abolished. Further, sine the temperature of the intake air is decreased, the inter-cooler can be made smaller in size. Still further, since the intake manifold 2 can be cooled, the charging efficiency can be improved. Moreover, generation of condensed water due to cooling of the EGR gas can be suppressed, by controlling the EGR valve 32 and the cooling water control valve 24, which, in turn, results in suppressing retention of condensed water inside the EGR passage 31.

### [Description of Reference Numerals]

- 1: internal combustion engine
- 2: intake manifold
- 3: exhaust manifold
- 10: cylinder head
- 21: flange
- 21A: flange surface
- 22: intake passage
- 22A: opening
- 22B: inlet
- 23: cooling water passage
- 24: cooling water control valve
- 30: EGR apparatus
- 31: EGR passage
- 31A: inner-head EGR passage
- 31B: EGR introduction passage
- 31C: EGR passage groove
- 31D: EGR external passage
- 32: EGR valve
- 33: EGR outlet
- 34: EGR inlet
- 35: communication groove
- 40: ECU
- 41: Temperature Sensor
- 42: Accelerator opening degree sensor

## Claims

1. An EGR apparatus for an internal combustion engine (1) comprising an EGR passage (31) which connects an exhaust passage and an intake passage of the internal combustion engine, and a part of an exhaust gas which flows through the exhaust passage is supplied to the intake passage as an EGR gas, wherein
a part of the EGR passage (31) is arranged to surround a part of the intake passage;
the intake passage is formed in an intake manifold (2) which distributes intake air to each cylinder;
the intake manifold (2) is structured by comprising a flange (21) for fixing the intake manifold (2) to a cylinder head (10) of the internal combustion engine (1);
the intake passage opens into a flange surface (21A) which is the surface on the side of the flange (21) where it contacts with the cylinder head (10);
a part of the EGR passage (31) is formed by a space which is surrounded by a groove (31C) formed along and surrounding the intake passage in the flange surface (21A), and by the cylinder head (10);
the EGR passage (31), which is at the downstream side, in the direction of the EGR gas, from an end of one end of the groove (31C) in a direction of arrangement of cylinders, is connected with an intake passage at the upstream side from a place where the groove (31C) is formed in the flow direction of intake air; and
the EGR passage (31), which is at the upstream side, in the direction of the EGR gas, from an end of the other end of the groove (31C) in the direction of arrangement of cylinders, is disposed along outer edges of the intake manifold (2).

2. The EGR apparatus for an internal combustion engine according to Claim 1, wherein
an EGR valve (32), which adjusts a passage area of the EGR passage (31), is provided in the EGR passage (31) at the downstream side from the groove (31C) in a flow direction of the EGR gas.

3. The EGR apparatus for an internal combustion engine according to Claim 1, wherein
a cooling water passage (23) is provided adjacent to the part of the EGR passage (31) which is arranged along outer edges of the intake manifold.

4. The EGR apparatus for an internal combustion engine according to Claim 3 further comprising:
a temperature acquiring apparatus (41) which acquires a temperature of cooling water inside the cooling water passage (23);
a cooling water control valve (24) which adjusts a passage area of the cooling water passage (23); and
a control apparatus (40) which controls the cooling water control valve (24) or the EGR valve (32) based on the temperature acquired by the temperature acquiring apparatus (41), wherein
the control apparatus (40) sets the temperature for opening the cooling water control valve (24) to a temperature higher than the temperature for opening the EGR valve (32).

## Patentansprüche

1. Abgasrückführungsvorrichtung für eine Maschine (1) mit interner Verbrennung mit einem Abgasrückführungsdurchlass (31), der einen Abgasdurchlass und einen Ansaugdurchlass der Maschine mit interner Verbrennung verbindet, und wobei ein Teil eines Abgases, das durch den Abgasdurchlass fließt, als ein rückgeführtes Abgas dem Ansaugdurchlass zugeführt wird, wobei
ein Teil des Abgasrückführungsdurchlasses (31) so angeordnet ist, dass er einen Teil des Ansaugdurchlasses umgibt;
der Ansaugdurchlass in einen Ansaugkrümmer (2) geformt ist, der Ansaugluft in jeden Zylinder verteilt;
der Ansaugkrümmer (2) so aufgebaut ist, dass er einen Flansch (21) zum Befestigen des Ansaugkrümmers (2) an einem Zylinderkopf (10) der Maschine (1) mit interner Verbrennung umfasst;
der Ansaugdurchlass sich in eine Flanschoberfläche (21A) öffnet, die die Oberfläche auf der Seite des Flanschs (21) ist, an der er den Zylinderkopf (10) berührt;
ein Teil des Abgasrückführungsdurchlasses (31) durch einen Raum geformt ist, der durch eine den Ansaugdurchlass in der Flanschoberfläche (21A) umgebende Nut (31C) und durch den Zylinderkopf (10) gebildet wird;
der Abgasrückführungsdurchlass (31), der in der Flussrichtung des Abgases (31) stromab eines Endes von einem Ende der Nut (31 C) in einer Richtung der Anordnung der Zylinder liegt, mit einem Ansaugdurchlass stromauf eines Platzes verbunden ist, an dem die Nut (31 C) in der Flussrichtung der Ansaugluft geformt ist, und
der Abgasrückführungsdurchlass (31), der sich in der Flussrichtung des Abgasrückführungsgases weiter stromaufwärts als ein Ende des anderen Endes der Nut (31 C) in der Richtung der Anordnung der Zylinder befindet, entlang von Außenkanten des Ansaugkrümmers (2) angeordnet ist.

2. Abgasrückführungsvorrichtung für eine Maschine mit interner Verbrennung nach Anspruch 1, wobei
ein Abgasrückführungsventil (32), das eine Durchtrittsfläche des Abgasrückführungsdurchlasses (31) anpasst, in dem Abgasrückführungsdurchlass (31) auf der stromabwärtigen Seite der Nut (31 C) in einer Flussrichtung des Abgasrückführungsgases vorgesehen ist.

3. Abgasrückführungsvorrichtung für eine Maschine mit interner Verbrennung nach Anspruch 1, wobei
ein Kühlwasserdurchlass (23) benachbart zu dem Teil des Abgasrückführungsdurchlasses (31) vorgesehen ist, der entlang von Außenkanten des Ansaugkrümmers angeordnet ist.

4. Abgasrückführungsvorrichtung für eine Maschine mit interner Verbrennung nach Anspruch 3, weiter mit:
einer Vorrichtung (41) zur Aufnahme einer Temperatur, die eine Temperatur von Kühlwasser innerhalb des Kühlwasserdurchlasses (23) aufnimmt;
einem Kühlwassersteuerventil (24), das eine Durchtrittsfläche des Kühlwasserdurchlasses (23) anpasst; und
einer Steuervorrichtung (40), die das Kühlwassersteuerventil (24) oder das Abgasrückführungsventil (32) auf der Grundlage der Temperatur steuert, die von der Temperaturaufnahmevorrichtung (41) aufgenommen wurde, wobei
die Steuervorrichtung (40) die Temperatur zum Öffnen des Kühlwassersteuerventils (24) auf eine Temperatur festlegt, die höher als die Temperatur zum Öffnen des Abgasrückführungsventils (32) ist.

## Revendications

1. Appareil de recirculation des gaz d'échappement (RGE) pour un moteur à combustion interne (1) comprenant un passage de RGE (31) qui raccorde un passage d'échappement et un passage d'admission du moteur à combustion interne, et une partie d'un gaz d'échappement qui s'écoule à travers le passage d'échappement est amenée au passage d'admission sous la forme de gaz de RGE, dans lequel
une partie du passage de RGE (31) est agencée pour entourer une partie du passage d'admission ;
le passage d'admission est formé dans un collecteur d'admission (2) qui distribue l'air d'admission à chaque cylindre ;
le collecteur d'admission (2) est structuré en ce qu'il comprend une bride (21) pour fixer le collecteur d'admission (2) sur une culasse (10) du moteur à combustion interne (1) ;
le passage d'admission s'ouvre dans une surface de bride (21A) qui est la surface sur le côté de la bride (21) où il est en contact avec la culasse (10) ;
une partie du passage de RGE (31) est formée par un espace qui est entouré par une rainure (316) formée le long de et entourant le passage d'admission dans la surface de bride (21A), et par la culasse (10) ;
le passage de RGE (31) qui est du côté en aval, dans la direction du gaz de RGE, à partir d'une extrémité de la une extrémité de la rainure (316) dans une direction d'agencement des cylindres, est raccordé avec un passage d'admission au côté en amont à partir d'un endroit où la rainure (316) est formée dans la direction d'écoulement de l'air d'admission ; et
le passage RGE (31), qui est du côté en amont, dans la direction du gaz de RGE, à partir d'une extrémité de l'autre extrémité de la rainure (316) dans la direction d'agencement des cylindres, est disposé le long des bords externes du collecteur d'admission (2).

2. Appareil de RGE pour un moteur à combustion interne selon la revendication 1, dans lequel :
une soupape de RGE (32) qui ajuste une zone de passage du passage de RGE (31), est prévue dans le passage de RGE (31) du côté en aval à partir de la rainure (316) dans une direction d'écoulement du gaz de RGE.

3. Appareil de RGE pour un moteur à combustion interne selon la revendication 1, dans lequel :
un passage d'eau de refroidissement (23) est prévu de manière adjacente à la partie du passage de RGE (31) qui est agencée le long des bords externes du collecteur d'admission.

4. Appareil de RGE pour un moteur à combustion interne selon la revendication 3, comprenant en outre :
un appareil d'acquisition de température (41) qui acquiert une température d'eau de refroidissement à l'intérieur du passage d'eau de refroidissement (23) ;
une valve de régulation d'eau de refroidissement (24) qui ajuste une zone de passage du passage d'eau de refroidissement (23) ; et
un appareil de régulation (40) qui régule la valve de régulation d'eau de refroidissement (24) ou la soupape de RGE (32) en fonction de la température acquise par l'appareil d'acquisition de température (41), dans lequel :
l'appareil de régulation (40) règle la température pour ouvrir la valve de régulation d'eau de refroidissement (24) à une température supérieure à la température pour ouvrir la soupape de RGE (32).
